# EUROPÄISCHE PATENTANMELDUNG

(11) **EP 4 124 417 A1**
(43) Veröffentlichungstag der Anmeldung: **01.02.2023**
(21) Anmeldenummer: 21188706.2
(22) Anmeldetag: 30.07.2021
(51) Int. Cl.: B25J 9/16, G05B 19/418, G05B 19/401

(54) **VERFAHREN ZUR KALIBRIERUNG EINES ROBOTERS**

(71) Anmelder: Siemens Aktiengesellschaft, 80333 München (DE)
(72) Erfinder: Hamm, Carsten, 91330 Eggolsheim (DE); Seeger, Guido, 91083 Baiersdorf (DE)

(57) **Zusammenfassung**

Die Erfindung betrifft ein Verfahren zur Kalibrierung eines Roboters (2), wobei sich ein Arbeitsraum (AR) des Roboters (2) wenigstens teilweise mit einem Arbeitsraum (AW) einer Werkzeug- und/oder Produktionsmaschine (4) überschneidet, wobei der Roboter (2) derart bewegt wird, dass sich ein Referenzpunkt des Roboters an einer ersten Position innerhalb des Arbeitsraums (AW) der Werkzeug- und/oder Produktionsmaschine (4) befindet, wobei ein dem Roboter (2) an der ersten Position vorliegender erster Positionswert mit einem der Werkzeug- und/oder Produktionsmaschine (4) an der Position vorliegenden ersten Positionswert verglichen wird, wobei, wenn sich der dem Roboter (2) vorliegende erste Positionswert von dem der Werkzeug- und/oder Produktionsmaschine (4) vorliegenden ersten Positionswert unterscheidet, der dem Roboter (2) vorliegende erste Positionswert korrigiert wird oder der der Werkzeug- und/oder Produktionsmaschine (4) vorliegende erste Positionswert korrigiert wird, derart, dass sich der dem Roboter (2) vorliegende erste Positionswert und der der Werkzeug- und/oder Produktionsmaschine (4) vorliegende erste Positionswert gleichen.

## Beschreibung

Die Erfindung betrifft ein Verfahren zur Kalibrierung eines Roboters.

Eine Zusammenarbeit von Roboter und Werkzeug- und/oder Produktionsmaschine ist z. B. bei der der Bearbeitung von Werkstücken von Vorteil. Mit Hilfe des Roboters können z. B. Vorgänge an einer Werkzeug- und/oder Produktionsmaschine automatisieret werden, die sonst von Hand erfolgen müssten. Hierzu zählen mitunter Belade- und Entladevorgänge.

Aber auch Arbeitsschritte, für die die Werkzeug- und/oder Produktionsmaschine selbst weniger gut geeignet ist, insbesondere, wenn das Werkstück in seiner Aufspannung verbleiben sollen, gelingen durch diese Zusammenarbeit gut. Dies sind z.B. Nachbearbeitungsschritte wie Entgraten.

Eine konstruktionsbedingt geringere Genauigkeit einer Mechanik des Roboters macht diese Zusammenarbeit jedoch schwierig.

WO 2005/084895 A1 behandelt ein Verfahren zum Einmessen eines Arbeitspunktes von Werkzeugen für Industrieroboter. Ein Verfahren zur Kalibrierung ist in EP 1 152 212 B1 beschrieben. Nachteilig ist hierbei, dass zur Vermessung eine optische Messvorrichtung benötigt wird.

Der Erfindung liegt die Aufgabe zugrunde, eine Zusammenarbeit von Roboter und Werkzeug- und/oder Produktionsmaschine zu verbessern.

Die Lösung der Aufgabe gelingt durch Anspruch 1, d. h. ein Verfahren zur Kalibrierung eines Roboters, wobei sich ein Arbeitsraum des Roboters wenigstens teilweise mit einem Arbeitsraum einer Werkzeug- und/oder Produktionsmaschine überschneidet, wobei der Roboter derart bewegt wird, dass sich ein Referenzpunkt des Roboters an einer ersten Position innerhalb des Arbeitsraums der Werkzeug- und/oder Produktionsmaschine befindet, wobei ein dem Roboter an der ersten Position vorliegender erster Positionswert mit einem der Werkzeug- und/oder Produktionsmaschine an der Position vorliegenden ersten Positionswert verglichen wird, wobei, wenn sich der dem Roboter vorliegende erste Positionswert von dem der Werkzeug- und/oder Produktionsmaschine vorliegenden ersten Positionswert unterscheidet, der dem Roboter vorliegende erste Positionswert korrigiert wird oder der der Werkzeug- und/oder Produktionsmaschine vorliegende erste Positionswert korrigiert wird, derart, dass sich der dem Roboter vorliegende erste Positionswert und der der Werkzeug- und/oder Produktionsmaschine vorliegende erste Positionswert gleichen.

In einer bevorzugten Ausführungsform wird der dem Roboter vorliegende erste Positionswert korrigiert.

Dies ist von Vorteil, da Werkzeug- und/oder Produktionsmaschinen üblicherweise eine höhere Genauigkeit aufweisen als Roboter. Typische Größenordnungen für die jeweils erreichbaren absoluten statischen Genauigkeiten sind ca. 1 mm für einen Roboter, insbesondere Industrieroboter, und ca. 10 µm für eine Werkzeug- und/oder Produktionsmaschine.

Die Erfindung bietet den Vorteil, dass eine zeitaufwändige und teure Kalibrierung des Roboters, insbesondere einer Robotermechanik, z.B. mittels eines 3D-Messmittels, die z. B. die Position einer Roboterhand (vorteilhaft einen Tool Center Point, kurz: TCP, aufweisend) erfassen, nicht nötig ist. Die Kalibrierung kann durch die Erfindung schnell und günstig erfolgen.

Die Erfindung ist zudem von Vorteil, da die Kalibrierung im Laufe der Nutzungszeit immer wieder durchgeführt werden kann.

Dies ist gegenüber einer derzeit üblichen Kalibrierung, welche meist nur im Rahmen einer Inbetriebsetzung erfolgt, ein großer Vorteil.

So können Fehler, welche sich im Laufe der Nutzungszeit akkumulieren, behoben werden.

Vorteilhaft ist eine Ausführung, wonach ein Positionswert eine erste Koordinate, eine zweite Koordinate und eine dritte Koordinate aufweist.

Vorzugsweise wird hierbei ein Koordinatensystem mit drei Achsen (x-Achse, y-Achse, z-Achse) genutzt.

Typisch, aber nicht zwingend, ist die Nutzung eines orthogonalen Koordinatensystems, insbesondere eines kartesischen Koordinatensystems.

Vorteilhaft ist eine Ausführung, wonach der Roboter derart bewegt wird, dass sich der Referenzpunkt des Roboters an einer zweiten Position innerhalb des Arbeitsraums der Werkzeug- und/oder Produktionsmaschine befindet, wobei ein dem Roboter an der zweiten Position vorliegender zweiter Positionswert mit einem der Werkzeug- und/oder Produktionsmaschine an der zweiten Position vorliegenden zweiten Positionswert verglichen wird, wobei, wenn sich der dem Roboter vorliegende zweite Positionswert von dem der Werkzeug- und/oder Produktionsmaschine vorliegenden zweiten Positionswert unterscheidet, der dem Roboter vorliegende zweite Positionswert korrigiert wird oder der der Werkzeug- und/oder Produktionsmaschine vorliegende zweite Positionswert korrigiert wird, derart, dass sich der dem Roboter vorliegende zweite Positionswert und der der Werkzeug- und/oder Produktionsmaschine vorliegende zweite Positionswert gleichen.

In einer bevorzugten Ausführungsform wird der dem Roboter vorliegende erste Positionswert korrigiert.

Vorteilhaft ist eine Ausführung, wonach ein dritter Positionswert mittels Interpolation oder Extrapolation basierend auf dem dem Roboter vorliegenden oder dem der Werkzeug- und/oder Produktionsmaschine vorliegenden korrigierten ersten Positionswert und dem dem Roboter vorliegenden oder dem der Werkzeug- und/oder Produktionsmaschine vorliegenden korrigierten zweiten Positionswert ermittelt wird.

So gelingt eine gute Abschätzung jener Punkte, für die keine gesonderte Kalibrierung erfolgt.

Durch die Erfindung kann die Genauigkeit des Roboters im Bereich des Arbeitsraums der Werkzeugmaschine signifikant erhöht werden, insbesondere die relative Genauigkeit von Roboter und Werkzeug- und/oder Produktionsmaschine zueinander. Eine ggf. eintretende geringfügige Verschlechterung der Genauigkeit des Roboters außerhalb des Arbeitsraums der Werkzeugmaschine kann hierbei in Kauf genommen werden.

Die genauere Werkzeug- und/oder Produktionsmaschine kann somit als Messnormal für den ungenaueren Roboter dienen.

Vorteilhaft ist eine Ausführung, wonach der Roboter derart bewegt wird, dass sich der Referenzpunkt des Roboters an einer Mehrzahl an Positionen innerhalb des Arbeitsraums der Werkzeug- und/oder Produktionsmaschine befindet.

Der Referenzpunkt befindet sich vorteilhaft in zeitlicher Abfolge an der Mehrzahl an Positionen.

In anderen Worten bedeutet dies vorteilhaft: Zuerst wird ein Punkt A angefahren, danach ein Punkt B. Anschließend kann z. B. ein Punkt C angefahren werden.

Vorteilhaft sind zwei oder mehr Positionen.

Vorteilhaft ist eine Ausführung, wonach die Mehrzahl an Positionen gitterförmig und/oder arrayförmig angeordnet ist oder wobei die Mehrzahl an Positionen derart angeordnet ist, dass die Positionen an oder nahe an kritischen Stellen eines zu bearbeitenden Werkstücks liegen.

Kritische Stellen sind beispielsweise: Ecken und/oder Kanten.

Ecken und Kanten sind vorteilhaft, weil sie leicht zu messen sind.

Vorteilhaft liegt ein Referenzpunkt dort, wo es besonders auf die Übereinstimmung von Roboter und Werkzeug- und/oder Produktionsmaschine ankommt.

Ein Beispiel hierfür ist: Zur Entgratung einer Kante durch den Roboter, ist eine Vermessung der Kante von Vorteil.

Ein anderes Beispiel betrifft ein Zusammenfügen von Bauteilen: Wenn der Roboter ein Bauteil in ein anderes steckt, dann ist es von Vorteil, die dafür vorgesehenen Nuten, Passungen etc. einzumessen.

Dies hat den Vorteil, dass kritische Stellen genau bearbeitet werden können.

Vorteilhaft ist eine Ausführung, wonach der Referenzpunkt des Roboters an einem Endeffektor des Roboters angeordnet ist.

Der Tool Center Point befindet sich vorteilhaft an einem Endeffektor des Roboters.

Vorteilhaft weist auch die Werkzeug- und/oder Produktionsmaschine einen Referenzpunkt auf. Dieser Referenzpunkt kann auch als Tool Center Point bezeichnet werden. Er befindet sich vorteilhaft an einem Durchstoßpunkt des Werkzeugs, welches an der Spindel der Werkzeug- und/oder Produktionsmaschine angeordnet ist.

Vorteilhaft ist eine Ausführung, wonach der Roboter derart bewegt wird, dass sich der Referenzpunkt des Roboters an einer Position auf einem Arbeitstisch der Werkzeug- und/oder Produktionsmaschine, beispielsweise in einer Ecke des Arbeitstisches der Werkzeug- und/oder Produktionsmaschine befindet.

Vorteilhaft ist hierbei, dass es innerhalb des Arbeitsraums der Werkzeug- und/oder Produktionsmaschine eine Vielzahl von Punkten gibt, deren Position bekannt ist. Hierzu zählen beispielsweise eine Oberfläche des Arbeitstisches und auch eine Position einer Werkzeugspitze.

Das Werkzeug kann zudem ein besonders genaues Messwerkzeug oder ein Messtaster sein.

Der Roboter kann eine Position bzw. einen Punkt anfahren, indem er beispielsweise selbst einen Messtaster oder ein Abstandsmessgerät führt, oder indem er einen mechanischen Kontakt herstellt - dies gelingt beispielsweise durch Auslenkung des Messtasters der Werkzeug- und/oder Produktionsmaschine oder Fahren auf Festanschlag -, und die Positionswerte seines TCP im Raum (insbesondere mittels dreier Koordinaten x, y, z) an diesen Punkten festhalten.

Eine Differenz zu den Positionswerten im Raum, die die Werkzeug- und/oder Produktionsmaschine für diese Punkte misst, gilt vorteilhaft als zu kompensierender Fehler der Robotermechanik an diesen Punkten. Die Werkzeug- und/oder Produktionsmaschine kann somit als Messmittel verwendet werden.

Fehler, die die Werkzeug- und/oder Produktionsmaschine selbst gegenüber einer idealen, fehlerfreien Werkzeug- und/oder Produktionsmaschine hat, wirken sich nicht aus, da es für die Zusammenarbeit von Roboter und Werkzeug- und/oder Produktionsmaschine im Wesentlichen auf die relative Genauigkeit der beiden zueinander ankommt.

Vorteilhaft ist eine Ausführung, wonach der Roboter derart bewegt wird, dass sich der Referenzpunkt des Roboters an einer Spindel der Werkzeug- und/oder Produktionsmaschine befindet.

Vorteilhaft ist eine Ausführung, wonach eine Berührung des Arbeitstischs und/oder der Spindel durch einen an und/oder in einem Endeffektor des Roboters vorhandenen Messtaster erkannt wird.

Der Roboter kann an den Arbeitstisch fahren, bis ein, vorzugsweise mechanischer, Kontakt erfolgt. Die Oberfläche des Tisches dient als Referenz zum Abgleich der beiden Koordinatensysteme. Nach diesem ersten Abgleich kann durch das Anfahren weiterer bekannter Punkte der Werkzeug- und/oder Produktionsmaschine eine Korrektur geometrischer Ungenauigkeiten der Robotermechanik erfolgen.

Vorteilhaft ist eine Ausführung, wonach eine Berührung der Spindel durch einen an und/oder in der Spindel vorhandenen Messtaster erkannt wird.

Es ist also auch möglich, dass ein Messtaster in einer Werkzeugaufnahme der Werkzeug- und/oder Produktionsmaschine angeordnet ist.

Vorteilhaft weist hierzu die Spindel der Werkzeug- und/oder Produktionsmaschine wenigstens einen Messtaster auf. Der Roboter fährt diesen an. Der Messtaster erkennt vorteilhaft eine Berührung. Ein Ausschlag einer Messuhr dient als Referenz zum Abgleich der beiden Koordinatensysteme des Roboters und der Werkzeug- und/oder Produktionsmaschine.

Nach diesem ersten Abgleich wird die Spindel der Werkzeug- und/oder Produktionsmaschine vorteilhaft an wenigstens eine weitere Position bewegt und der beschriebene Vorgang wird wiederholt.

Wenn die Punkte, wie vorstehend beschrieben, den gemeinsamen Arbeitsraum hinreichend abdecken, können diese Stützstellen verwendet werden, um Fehler an anderen, nicht gemessenen Punkten im Arbeitsraum zu interpolieren bzw. zu extrapolieren. Das resultierende Kennfeld dient vorteilhaft dazu, innerhalb des Arbeitsraums der Werkzeug- und/oder Produktionsmaschine Kompensationswerte in die Bewegung des Roboters einzuspeisen, so dass er die aus Sicht der Werkzeug- und/oder Produktionsmaschine benötigten Positionen genauer trifft. Damit werden z. B. auch Konturen, die der Roboter bei Bearbeitungsvorgängen ausführt, auf dem Werkstück sehr viel genauer eingehalten.

Eine alternative Verrechnung der gemessenen Positionswerte besteht darin, die geometrischen Kennwerte der Robotermechanik, insbesondere eine genaue Lage der Gelenke zueinander, Abmessungen der Roboterarm-Segmente zwischen den Gelenken und/oder lastabhängige Durchbiegung, zu korrigieren.

Dies gelingt beispielsweise durch Aufstellen eines überbestimmten Gleichungssystems anhand kinematischer Transformationsgleichungen des Roboters. Eine Lösung gelingt beispielsweise mittels einer Methode der kleinsten Fehlerquadrate. Dies ist besonders dann von Vorteil, wenn ein Roboterhersteller keine Korrektur (wie oben beschrieben) mechanischer Ungenauigkeiten (insbesondere Abweichungen von der idealen Geometrie) ab Werk vorgenommen hat und der Arbeitsraum der Werkzeug- und/oder Produktionsmaschine groß genug ist, um alle Gelenke des Roboters hinreichend auszulenken, sodass Fehler auch sichtbar werden können.

So kann auch die Genauigkeit des Roboters außerhalb des Arbeitsraums der Werkzeug- und/oder Produktionsmaschine gesteigert werden.

Wenn hierbei Positionsfehler an Messpositionen im Arbeitsraum nicht Null werden, kann nach der alternativen Verrechnung der Messwerte ein zweiter Durchgang durchgeführt werden, um dies auszugleichen. Beispielsweise indem mit der geometrisch korrigierten Robotermechanik wiederum alle Messpositionen angefahren werden und die verbliebenen Fehler mit dem erstgenannten Kompensationsverfahren eliminiert werden.

Ein Abgleich zwischen Werkzeug- und/oder Produktionsmaschine und Roboter ist nicht auf die Auswertung kartesischer Koordinaten (x, y, z) beschränkt.

In einer weiteren vorteilhaften Ausgestaltung der Erfindung können auch Winkellagen von Werkzeug- und/oder Produktionsmaschine und Roboter zueinander ermittelt und verrechnet werden. Damit können nicht nur eine Positionierung, sondern auch eine Orientierung in Übereinstimmung gebracht werden.

Die Lösung der oben gestellten Aufgabe gelingt ferner durch Anspruch 12, d. h. ein System zur Durchführung des Verfahrens, aufweisend einen Roboter und eine Werkzeug- und/oder Produktionsmaschine, derart angeordnet, dass sich ein Arbeitsraum des Roboters wenigstens teilweise mit einem Arbeitsraum einer Werkzeug- und/oder Produktionsmaschine überschneidet.

Die Lösung der oben gestellten Aufgabe gelingt zudem durch Anspruch 13, d. h. eine Verwendung einer Werkzeug- und/oder Produktionsmaschine als Messwerkzeug, wobei die Werkzeug- und/oder Produktionsmaschine einen Messtaster aufweist, vorzugsweise an und/oder in einer Spindel.

Im Folgenden wird die Erfindung anhand der in den Figuren dargestellten Ausführungsbeispiele näher beschrieben und erläutert. Es zeigen
- FIG 1: ein System, aufweisend einen Roboter sowie eine Werkzeug- und/oder Produktionsmaschine,
- FIG 2: eine erste mögliche Ausführungsform,
- FIG 3: eine zweite mögliche Ausführungsform
- FIG 4: das erfindungsgemäße Verfahren,
- FIG 5: beispielhaft einen Arbeitsraum des Roboters sowie einen Arbeitsraum der Werkzeug- und/oder Produktionsmaschine,
- FIG 6 und FIG 7: beispielhaft eine Zuordnung numerischer Steuerungen.

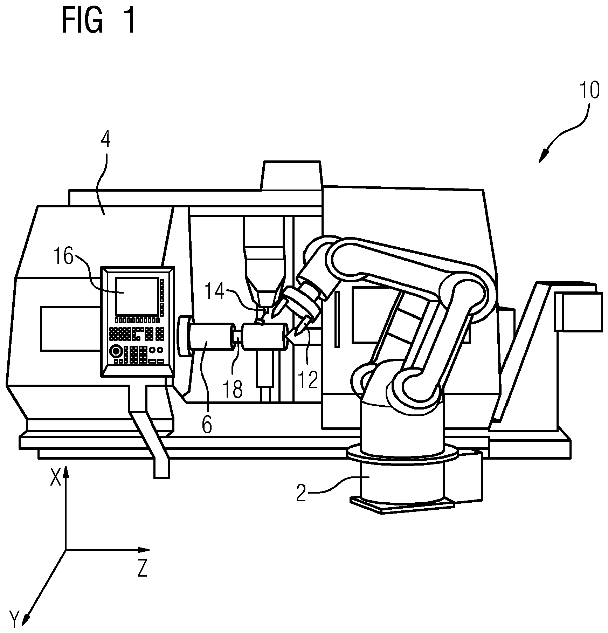

FIG 1 zeigt ein System 10, aufweisend einen Roboter 2 sowie eine Werkzeug- und/oder Produktionsmaschine 4.

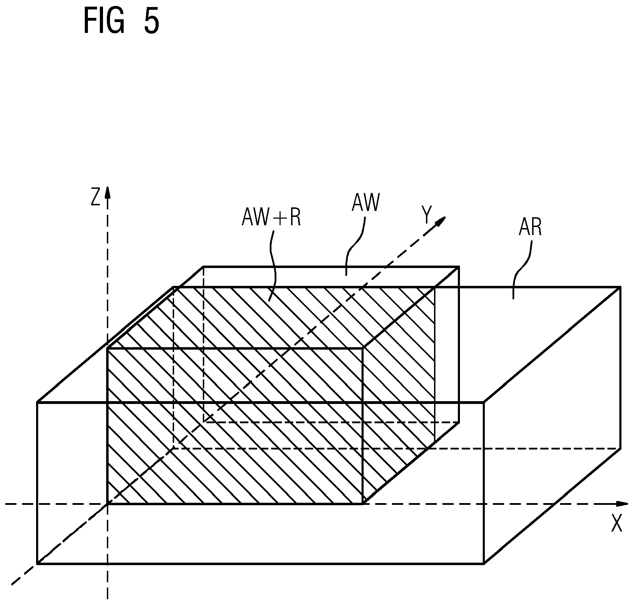

Der Roboter 2 und die Werkzeug- und/oder Produktionsmaschine 4 sind derart angeordnet, dass sich ein Arbeitsraum des Roboters AR (siehe FIG 5) und ein Arbeitsraum der Werkzeug- und/oder Produktionsmaschine AW wenigstens teilweise überschneiden (siehe FIG 5).

Die Figur zeigt ferner ein Werkstück 6, einen Tool Center Point (TCP) 12 des Roboters.

Eine Werkzeugposition des Roboters 2 wird über seinen Endeffektor beschrieben. Dies ist ein gedachter Referenzpunkt, der sich an einer geeigneten Stelle am Werkzeug befindet. Der Referenzpunkt gemäß Anspruch 1 ist vorteilhaft der TCP 12.

Die Figur zeigt zudem eine Anzeige 16 der Werkzeug- und/oder Produktionsmaschine 4. Die Figur zeigt, dass das Werkstück 6 im Bereich 18 bereits bearbeitet wurde.

Die Bearbeitung eines Werkstücks 6 gelingt dadurch, dass Werkzeug- und/oder Produktionsmaschine 4 und Roboter 2 kooperieren. Beispielsweise ist durch die Werkzeug- und/oder Produktionsmaschine 4 ein Spanen und Fügen eines Werkstücks 6 möglich.

Der Roboter 2 kann beispielsweise das Werkstück 6 platzieren. Der Roboter 2 kann zudem zum Säubern, zum Entgraten und/oder zum Polieren ausgebildet sein. Auch andere Aufgaben können durch den Roboter 2 durchgeführt werden.

Eine Bearbeitung des Werkstücks 6 kann gleichzeitig von Werkzeug- und/oder Produktionsmaschine 4 und Roboter 2 erfolgen.

Vorteilhaft ist jedoch eine sogenannte gemeinsame Bearbeitung, bei welcher das Werkstück 6 abwechselnd von Werkzeug- und/oder Produktionsmaschine 4 und Roboter 2 bearbeitet werden. Jedoch ist auch eine gleichzeitige Bearbeitung möglich.

Die Werkzeug- und/oder Produktionsmaschine 4 weist gegenüber dem Roboter 2 eine höhere Genauigkeit auf. Oft ist eine Werkzeug- und/oder Produktionsmaschine 4 um mindestens eine Größenordnung genauer.

Der Roboter 2 weist beispielsweise eine Genauigkeit, insbesondere statische Genauigkeit, von ca. 1 mm, die Werkzeug- und/oder Produktionsmaschine 4 von ca. 10 µm, auf.

Die Erfindung bietet den Vorteil, dass die Genauigkeit des Roboters 2 im Bereich des Arbeitsraums der Werkzeug- und/oder Produktionsmaschine 4 erhöht werden kann, insbesondere eine relative Genauigkeit von Roboter 2 zu Werkzeug- und/oder Produktionsmaschine 4 zueinander können signifikant erhöht werden.

Eine gegebenenfalls eintretende geringfügige Verschlechterung der Genauigkeit des Roboters 2 außerhalb des sich überschneidenden Arbeitsraums von Werkzeug- und/oder Produktionsmaschine 4 und Roboter 2, kann hierbei durchaus in Kauf genommen werden.

Vorteilhaft dient die genauere Werkzeug- und/oder Produktionsmaschine 4 als Messnormal für den ungenaueren Roboter 2.

Das in der Figur gezeigte System 10 zeigt eine mögliche Anordnung von Werkzeug- und/oder Produktionsmaschine 4 und Roboter 2. Der Roboter 2 ist hierbei bezüglich der Werkzeug- und/oder Produktionsmaschine 4 derart angeordnet, dass sich die beiden Arbeitsräume wenigstens teilweise überschneiden.

Jedoch ist auch ein Verfahren außerhalb dieses gemeinsamen Arbeitsraums durch den Roboter 2 als auch durch die Werkzeug- und/oder Produktionsmaschine 4 möglich.

Innerhalb des Arbeitsraums der Werkzeug- und/oder Produktionsmaschine 4 sind eine Vielzahl von Punkten, deren Position genau bekannt ist, verfügbar. Hierzu zählen beispielsweise eine Fläche eines Arbeitstisches sowie eine Position einer Werkzeugspitze 14 und/oder Spindel der Werkzeug- und/oder Produktionsmaschine 4.

Ein Tool Center Point der Werkzeug- und/oder Produktionsmaschine 4 ist vorteilhaft an der Werkzeugspitze 14 angeordnet.

Der Roboter 2 kann diese Punkte anfahren. Beispielsweise indem er selbst einen Messtaster aufweist und/oder ein Abstandsmessgerät führt. Beispielsweise durch Herstellung eines mechanischen Kontaktes, beispielsweise zwischen Tool Center Point 12 und Arbeitstisch, kann ein Positionswert des Tool Center Points 12 im Raum bestimmt werden.

Der Positionswert umfasst vorteilhaft drei Koordinaten. Eine erste Koordinate legt vorteilhaft einen Positionswert einer x-Achse fest, eine zweite Koordinate legt vorzugsweise eine Position auf der y-Achse fest und eine dritte Koordinate gibt vorzugsweise eine Position auf einer z-Achse an.

Eine Differenz zu den Positionswerten, die die Werkzeug- und/oder Produktionsmaschine 4 für diesen Punkt misst, beispielsweise mittels eines eigenen Messtasters, gilt als zu kompensierender Fehler einer Robotermechanik an diesem Punkt.

Die Werkzeug- und/oder Produktionsmaschine 4 kann zu diesem Zweck als Messmittel verwendet werden. Fehler die die Werkzeug- und/oder Produktionsmaschine 4 selbst gegenüber einer idealen bzw. fehlerfreien Werkzeug- und/oder Produktionsmaschine 4 hat, wirken sich hierbei nicht aus, da es für eine Zusammenarbeit von Roboter 2 und/oder Werkzeug- und/oder Produktionsmaschine 4 nur auf eine relative Genauigkeit der beiden Geräte zueinander ankommt.

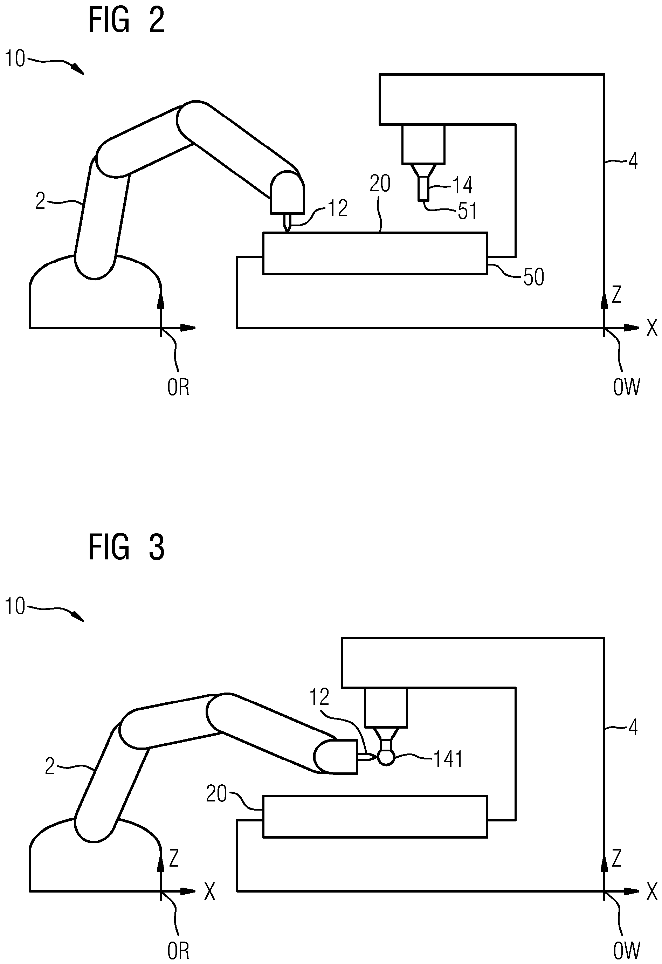

FIG 2 zeigt eine erste mögliche Ausführungsform.

Die Figur zeigt das System 10, aufweisend einen Roboter 2 sowie eine Werkzeug- und/oder Produktionsmaschine 4.

Ferner zeigt die Figur einen Arbeitstisch 20, einen Nullpunkt des Roboters OR sowie einen Nullpunkt der Werkzeug- und/oder Produktionsmaschine 0W. Zudem sind Tool Center Point 12 des Roboters 2 sowie Werkzeugspitze 14 der Werkzeug- und/oder Produktionsmaschine 4 gekennzeichnet.

In dieser Ausführungsform wird der Roboter 2 derart bewegt, bis er vorteilhaft einen mechanischen Kontakt mit dem Arbeitstisch 20 hat. Eine Oberfläche des Arbeitstischs 20 kann hier bei einem Abgleich der beiden Koordinatensysteme dienen. Vorteilhaft fährt der Roboter 2 mehrere Positionen an der Oberfläche des Arbeitstischs 20 an.

Es ist möglich, dass ein Koordinatensystem des Roboters 2 ein anderes Koordinatensystem ist, als das der Werkzeug- und/oder Produktionsmaschine 4. Vorteilhaft ist dann eine Umrechnung von Lagewerten des einen Koordinatensystems in das andere.

FIG 3 zeigt eine zweite mögliche Ausführungsform.

Die Figur zeigt das die Werkzeug- und/oder Produktionsmaschine 4 einen Messtaster 141 aufweist. Der Roboter 2 fährt den Messtaster 141 an, derart, dass eine Berührung zwischen Tool Center Point 12 und Messtaster 141 stattfindet.

Ein Ausschlagen einer Messuhr des Messtasters 141 ist hierbei eine Referenz zum Abgleich der beiden Koordinatensysteme.

Vorteilhaft wird die Werkzeugspitze 14 der Werkzeug- und/oder Produktionsmaschine 4 an eine andere Position gefahren, um einen zweiten Abgleich zu tätigen.

Auch hierbei wird der Roboter 2 derart bewegt, dass sich Tool Center Point 12 und Messtaster 141 vorteilhaft berühren. Die erste Berührung bringt einen den Roboter 2 an einer ersten Position vorliegenden ersten Positionswert hervor sowie einen der Werkzeug- und/oder Produktionsmaschine 4 an der Position vorliegenden ersten Positionswert.

Durch einen Vergleich der beiden Werte kann ein Unterschied erkennbar sein. Unterscheiden sich die beiden Werte, wird vorteilhaft der dem Roboter 2 vorliegende erste Positionswert korrigiert derart, dass sich die beiden Positionswerte gleichen. Alternativ kann auch der der Werkzeug- und/oder Produktionsmaschine 4 vorliegende Positionswert korrigiert werden.

Analog gelingt eine Ermittlung des zweiten Positionswerts, insbesondere eines zweiten korrigierten Positionswerts. Punkte, die zwischen oder außerhalb dieser Positionswerte liegen, können mittels Interpolation bzw. Extrapolation ermittelt werden.

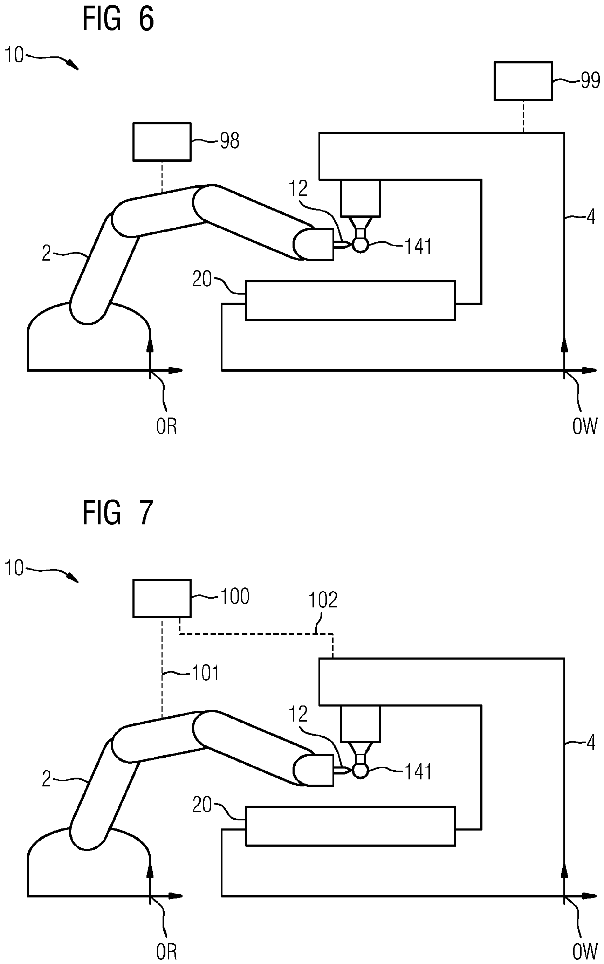

Vorteilhaft hat der Roboter 2 eine numerische Steuerung 98 (siehe FIG 6).

Vorteilhaft weist auch die Werkzeug- und/oder Produktionsmaschine 4 eine numerische Steuerung 99 (siehe FIG 6) auf.

Alternativ ist denkbar, dass eine übergeordnete numerische Steuerung 100 (siehe FIG 7) im System 10 verfügbar ist, welche zwei Kanäle 101 und 102 (siehe FIG 7) aufweist.

Ein erster Kanal 101 ist hierbei vorteilhaft dem Roboter 2 zugeordnet. Ein zweiter Kanal 102 ist hierbei vorteilhaft der Werkzeug- und/oder Produktionsmaschine 4 zugeordnet.

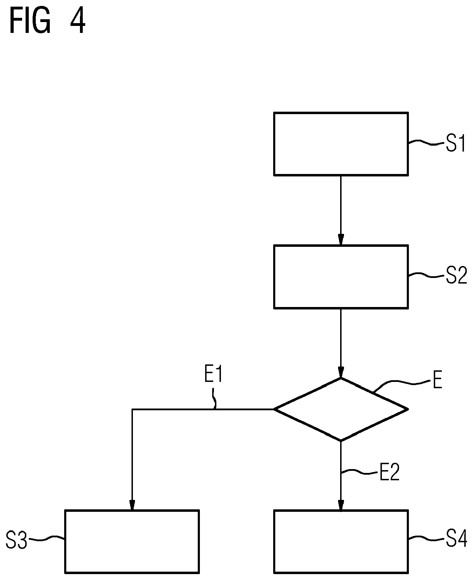

FIG 4 zeigt das erfindungsgemäße Verfahren.

In einen Verfahrensschritt S1 wird der Roboter 2 derart bewegt, dass sich ein Referenzpunkt des Roboters an einer ersten Position innerhalb des Arbeitsraums der Werkzeug- und/oder Produktionsmaschine 4 befindet.

In einen Verfahrensschritt S2 wird ein dem Roboter 2 an der ersten Position vorliegender erster Positionswert mit einem der Werkzeug- und/oder Produktionsmaschine 4 an der Position vorliegenden erste Produktionswert verglichen.

Wenn sich der dem Roboter 2 vorliegende erste Positionswert von dem der Werkzeug- und/oder Produktionsmaschine 4 vorliegenden ersten Positionswert unterscheidet (gekennzeichnet durch Entscheidung E2, Abfrage durch E gekennzeichnet) wird der dem Roboter 2 vorliegende erste Positionswert im Verfahrensschritt S4 korrigiert.

Unterscheiden sich die Werte nicht, erfolgt keine Korrektur im Verfahrensschritt S3.

Alternativ kann auch der der Werkzeug- und/oder Produktionsmaschine 4 vorliegende erste Positionswert korrigiert werden (siehe Verfahrensschritt S4). Bevorzugt wird jedoch die Korrektur des dem Roboter 2 vorliegenden ersten Positionswert, da eine Genauigkeit der Werkzeug- und/oder Produktionsmaschine 4 höher ist.

Die Korrektur erfolgt derart, dass sich der dem Roboter 2 vorliegende erste Positionswert und der der Werkzeug- und/oder Produktionsmaschine 4 vorliegende erste Positionswert gleichen.

FIG 5 zeigt rein exemplarisch einen Arbeitsraum des Roboters AR sowie einen Arbeitsraum AW der Werkzeug- und/oder Produktionsmaschine 4. Ein sich überschneidender Bereich ist mit AW+R gekennzeichnet.

## Patentansprüche

1. Verfahren zur Kalibrierung eines Roboters (2), wobei sich ein Arbeitsraum (AR) des Roboters (2) wenigstens teilweise mit einem Arbeitsraum (AW) einer Werkzeug- und/oder Produktionsmaschine (4) überschneidet,
wobei der Roboter (2) derart bewegt wird, dass sich ein Referenzpunkt des Roboters an einer ersten Position innerhalb des Arbeitsraums (AW) der Werkzeug- und/oder Produktionsmaschine (4) befindet,
wobei ein dem Roboter (2) an der ersten Position vorliegender erster Positionswert mit einem der Werkzeug- und/oder Produktionsmaschine (4) an der Position vorliegenden ersten Positionswert verglichen wird,
wobei, wenn sich der dem Roboter (2) vorliegende erste Positionswert von dem der Werkzeug- und/oder Produktionsmaschine (4) vorliegenden ersten Positionswert unterscheidet, der dem Roboter (2) vorliegende erste Positionswert korrigiert wird oder
der der Werkzeug- und/oder Produktionsmaschine (4) vorliegende erste Positionswert korrigiert wird,
derart, dass sich der dem Roboter (2) vorliegende erste Positionswert und der der Werkzeug- und/oder Produktionsmaschine (4) vorliegende erste Positionswert gleichen.

2. Verfahren nach Anspruch 1, wobei ein Positionswert eine erste Koordinate (x), eine zweite Koordinate (y) und eine dritte Koordinate (z) aufweist.

3. Verfahren nach einem der vorhergehenden Ansprüche, wobei der Roboter (2) derart bewegt wird, dass sich der Referenzpunkt (12) des Roboters (2) an einer zweiten Position innerhalb des Arbeitsraums (AW) der Werkzeug- und/oder Produktionsmaschine (4) befindet,
wobei ein dem Roboter (2) an der zweiten Position vorliegender zweiter Positionswert mit einem der Werkzeug- und/oder Produktionsmaschine (4) an der zweiten Position vorliegenden zweiten Positionswert verglichen wird,
wobei, wenn sich der dem Roboter (2) vorliegende zweite Positionswert von dem der Werkzeug- und/oder Produktionsmaschine (4) vorliegenden zweiten Positionswert unterscheidet, der dem Roboter (2) vorliegende zweite Positionswert korrigiert wird oder
der der Werkzeug- und/oder Produktionsmaschine (4) vorliegende zweite Positionswert korrigiert wird,
derart, dass sich der dem Roboter (2) vorliegende zweite Positionswert und der der Werkzeug- und/oder Produktionsmaschine vorliegende zweite Positionswert (4) gleichen.

4. Verfahren nach Anspruch 3, wobei ein dritter Positionswert mittels Interpolation oder Extrapolation basierend auf dem dem Roboter (2) vorliegenden oder dem der Werkzeug- und/oder Produktionsmaschine (4) vorliegenden korrigierten ersten Positionswert und dem dem Roboter (2) vorliegenden oder dem der Werkzeug- und/oder Produktionsmaschine (4) vorliegenden korrigierten zweiten Positionswert ermittelt wird.

5. Verfahren nach einem der vorhergehenden Ansprüche, wobei der Roboter (2) derart bewegt wird, dass sich der Referenzpunkt (12) des Roboters (2) an einer Mehrzahl an Positionen innerhalb des Arbeitsraums (AW) der Werkzeug- und/oder Produktionsmaschine (4) befindet.

6. Verfahren nach Anspruch 5, wobei die Mehrzahl an Positionen gitterförmig und/oder arrayförmig angeordnet ist oder wobei die Mehrzahl an Positionen derart angeordnet ist, dass die Positionen an oder nahe an kritischen Stellen eines zu bearbeitenden Werkstücks liegen.

7. Verfahren nach einem der vorhergehenden Ansprüche, wobei der Referenzpunkt (12) des Roboters (2) an einem Endeffektor des Roboters angeordnet ist.

8. Verfahren nach einem der vorhergehenden Ansprüche, wobei der Roboter (2) derart bewegt wird, dass sich der Referenzpunkt (12) des Roboters (2) an einer Position auf einem Arbeitstisch (20) der Werkzeug- und/oder Produktionsmaschine (4), beispielsweise in einer Ecke (50) des Arbeitstisches (20) der Werkzeug- und/oder Produktionsmaschine (4) befindet.

9. Verfahren nach einem der vorhergehenden Ansprüche, wobei der Roboter (2) derart bewegt wird, dass sich der Referenzpunkt (12) des Roboters (2) an einer Spindel (51) der Werkzeug- und/oder Produktionsmaschine (4) befindet.

10. Verfahren nach einem Anspruch 9, wobei eine Berührung des Arbeitstischs (20) und/oder der Spindel (51) durch einen an und/oder in einem Endeffektor des Roboters (2) vorhandenen Messtaster erkannt wird.

11. Verfahren nach einem der Ansprüche 9 oder 10, wobei eine Berührung der Spindel (51) durch einen an und/oder in der Spindel vorhandenen Messtaster (141) erkannt wird.

12. System (10) zur Durchführung des Verfahrens nach einem der Ansprüche 1 bis 10, aufweisend einen Roboter (2) und eine Werkzeug- und/oder Produktionsmaschine (4), derart angeordnet, dass sich ein Arbeitsraum (AR) des Roboters (2) wenigstens teilweise mit einem Arbeitsraum (AW) einer Werkzeug- und/oder Produktionsmaschine (4) überschneidet.

13. Verwendung einer Werkzeug- und/oder Produktionsmaschine (4) als Messwerkzeug, wobei die Werkzeug- und/oder Produktionsmaschine (4) einen Messtaster (141) aufweist, vorzugsweise an und/oder in einer Spindel (51).
